# EUROPÄISCHE PATENTSCHRIFT

(11) **EP 0 920 465 B1**
(45) Veröffentlichungstag und Bekanntmachung des Hinweises auf die Patenterteilung: **06.11.2002**
(21) Anmeldenummer: 97936702.6
(22) Anmeldetag: 11.08.1997
(51) Int. Cl.: C08F 232/00, C08F 210/00

(54) **ELASTOMERE CYCLOOLEFINCOPOLYMERE**
ELASTOMERIC CYCLOOLEFINPOLYMER
CYCLOOLEFINEPOLYMERE ELASTOMERE

(30) Priorität: 21.08.1996 DE 19633641
(43) Veröffentlichungstag der Anmeldung: 09.06.1999
(73) Patentinhaber: Ticona GmbH, 65451 Kelsterbach (DE)
(72) Erfinder: HATKE, Wilfried, D-65719 Hofheim (DE); HELMER-METZMANN, Freddy, D-55270 Essenheim (DE); OSAN, Frank, D-65779 Kelkheim (DE); WEHRMEISTER, Thomas, D-65474 Bischofsheim (DE)
(86) Internationale Anmeldenummer: EP9704363
(87) Internationale Veröffentlichungsnummer: WO98007768

(56) Entgegenhaltungen:
- EP-A- 0 466 279
- EP-A- 0 504 418
- WO-A-94/17113
- WO-A-96/11983
- WO-A-96/40806
- US-A- 5 635 573

## Beschreibung

Die vorliegende Erfindung bezieht sich auf die Herstellung von elastomeren Cycloolefincopolymerem mit hoher Transparenz, hoher Sperrwirkung gegen Wasserdampf und Gase wie Sauerstoff, guter Sterilisierbarkeit durch alle gängigen Verfahren und guten mechanischen Eigenschaften, wie Knickstabilität.

Für medizinische Artikel wie beispielsweise Beutel und Schläuche wird vornehmlich PVC verwendet. Nachteilig sind beim PVC die hohen Anteile an Weichmachern, die dem PVC zugesetzt werden müssen und die migrieren oder ausbluten können. Nachteilig ist weiter die Emission halogenhaltiger Verbindungen aus PVC bei der Entsorgung der Artikel.

Aus WO-A-17113 ist ein elastisches Copolymer bekannt, das 70 bis 95 mol-% eines α-Olefins und 5 bis 30 mol-% eines cyclischen Olefins enthält. Die Glastemperatur beträgt weniger als 50 °C. Das Massemittel ist größer als 60000, insbesondere 90000 Dalton.

Aus EP-A-504418 ist ein cyclisches Olefincopolymer bekannt, das 80 bis 99,9 mol-% eines α-Olefins und 0,1 bis 20 mol-% eines cyclischen Olefins enthält. Die Glastemperatur beträgt weniger als 30 °C. Die Schmelztemperatur ist kleiner 90 °C.

Aus der WO-A-96/11,983 und der EP-A-0 690 078 sind ebenfalls elastomere Cycloolefincopolymere bekannt.

Aufgabe der vorliegenden Erfindung besteht darin, ein Verfahren zur Herstellung elastomerer Cycloolefinpolymerer bereitzustellen, mit dem ohne Verwendung halogenhaitiger Monomerer und Weichmacher elastomere Cycloolefinpolymere mit hoher Transparenz, hoher Sperrwirkung gegen Wasserdampf und Gase wie Sauerstoff, gute Sterilisierbarkeit und mechanische Eigenschaften wie Knickstabilltät, darstellbar sind.

Die Aufgabe der vorliegenden Erfindung wird durch das Verfahren gemäß Anspruch 1 gelöst, wodurch elastomere Cycloolefincopolymere, die sich von mindestens einem cyclischen, insbesondere polycyclischen Olefin und mindestens einem acyclischen Olefin ableiten, erhältlich sind.

Das erfindungsgemäß erhältliche elastomere Cycloolefincopolymer kann polymerisierte Einheiten enthalten, die sich von mindestens einem cyclischen, insbesondere polycyclischen Olefin und mindestens einem acyclischen Olefin ableiten. Die cyclischen, insbesondere polycyclischen Olefine weisen vorzugsweise 5 bis 50, insbesondere 5 bis 30 Kohlenstoffatome auf. Die acyclischen Olefine sind bevorzugt α-Olefine mit 2 bis 40 Kohlenstoffatomen.

Die Erfindung betrifft ein Verfahren zur Herstellung eines Elastomeren durch Copolymerisation von 0,1 bis 50 mol%, bezogen auf die Gesamtzusammensetzung des Cycloolefincopolymers, polymerisierte Einheiten enthält, welche sich ableiten von einem oder mehreren polycyclischen Olefinen der Formeln I, II, III, IV. V oder VI, 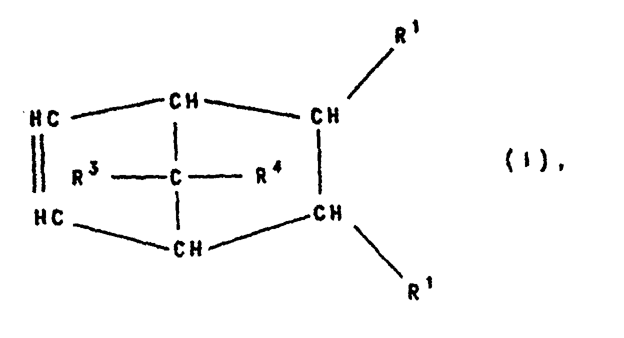 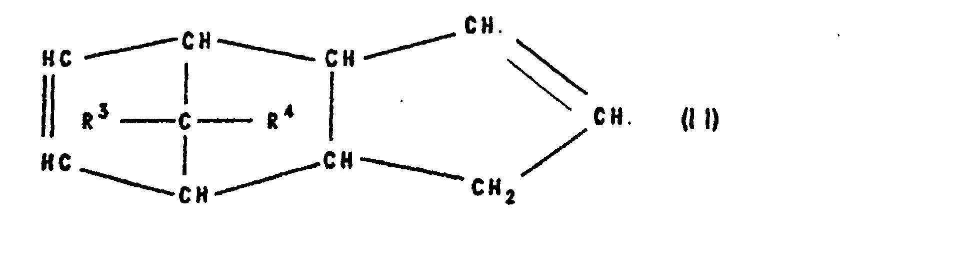 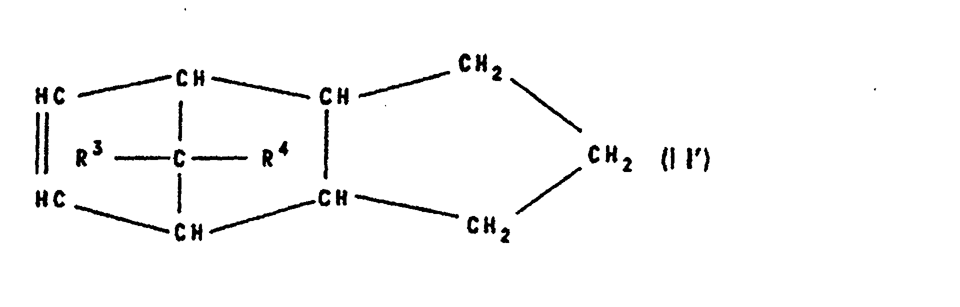 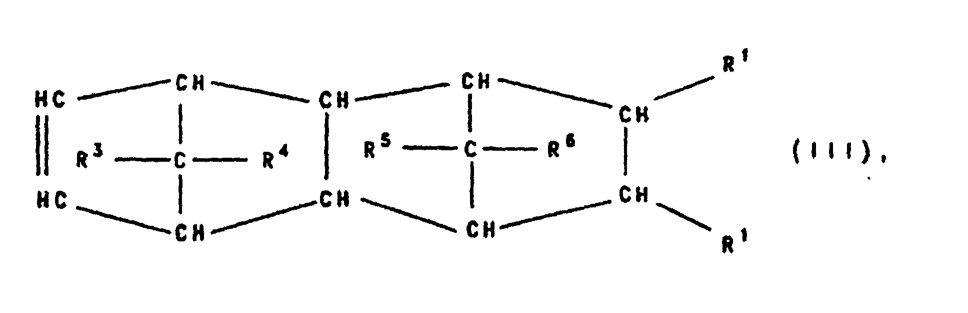 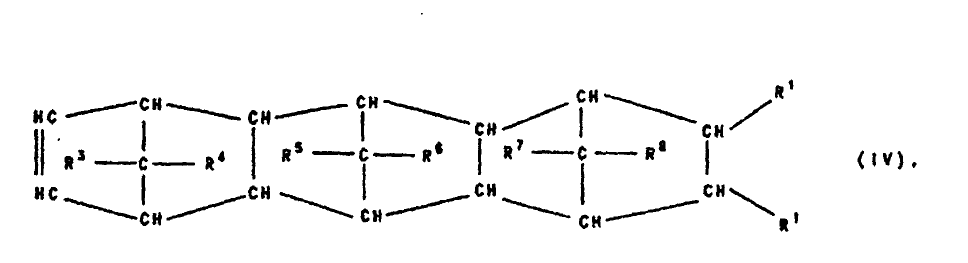 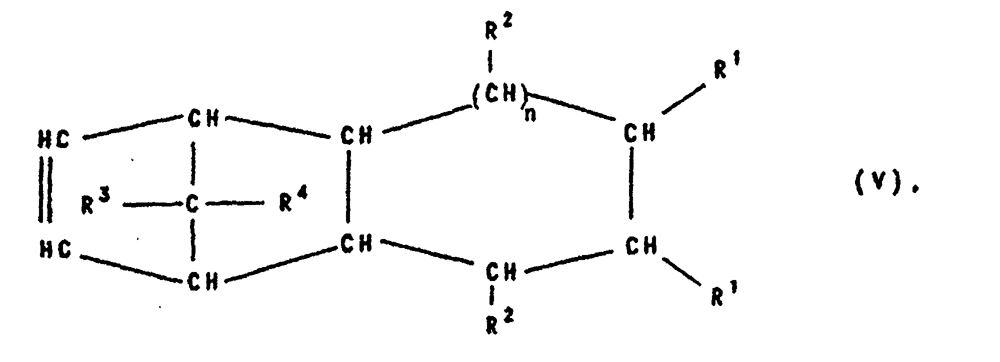 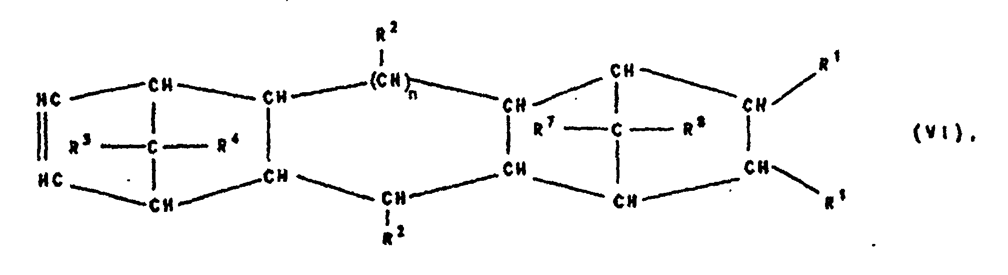 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest. C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und
50 bis 99,9 mol-%, bezogen auf die Gesamtzusammensetzung des Cycloolefincopolymers, polymerisierte Einheiten, welche sich ableiten von einem oder mehreren acyclischen Olefinen der Formel VII 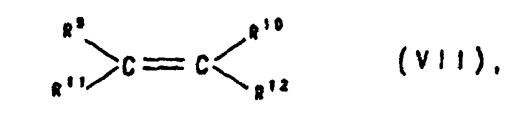 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten, in An wesenheit eines Katalysator system enthaltend eine weites unten definierte Übergangsmetall verbindung und einen Cokatalysator.

Außerdem kann das erfindungsgemäß hergestellte elastomere Cycloolefincopolymer 50 bis 99,9 mol-%, bezogen auf die Gesamtzusammensetzung des Cycloolefincopolymers, polymerisierte Einheiten enthalten, welche sich ableiten von einem oder mehreren monocyclischen Olefinen der Formel VIII 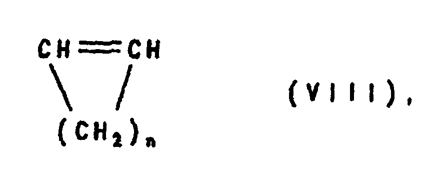 worin n eine Zahl von 2 bis 10 ist.

Der Anteil der polymerisierten Einheiten, die sich ableiten von cyclischen, insbesondere polycyclischen Olefinen beträgt bevorzugt 3 bis 25 mol-% bezogen auf die Gesamtzusammensetzung des Cycloolefincopolymers. Der Anteil der polymerisierten Einheiten, die sich ableiten von acyclischen Olefinen beträgt bevorzugt 75 bis 97 mol% bezogen auf die Gesamtzusammensetzung des Cycloolefincopolymers.

Bevorzugt bestehen die erfindungsgemäß hergestellten Cycloolefincopolymere aus polymerisierten Einheiten, die sich ableiten von einem oder mehreren polycyclischen Olefinen, insbesondere polycyclischen Olefinen der Formeln I oder III, und polymerisierten Einheiten, die sich ableiten von einem oder mehreren acyclischen Olefinen der Formel VII, insbesondere α-Olefinen mit 2 bis 20 C-Atomen. Insbesondere ist die Herstellung von Cycloolefincopolymeren bevorzugt, die aus polymerisierten Einheiten bestehen, die sich ableiten von einem polycyclischen Olefin der Formel I oder III und einem acyclischen Olefin der Formel VII. Weiterhin bevorzugt ist die Herstellung von Terpolymeren, die aus polymerisierten Einheiten bestehen, die sich ableiten von einem polycyclischen Monoolefin der Formel oder III, einem acyclischen Monoolefin der Formel VII und einem cyclischen oder acyclischen Olefin, welches mindestens zwei Doppelbindungen enthält (Polyen), insbesondere cyclische, bevorzugt polycyclische Diene wie Norbornadien oder cyclische, besonders bevorzugt polycyclische Alkene, die einen C₂-C₂₀-Alkenylrest tragen wie Vinylnorbornen.

Bevorzugt enthalten die erfindungsgemäß hergestellten elastomeren Cycloolefincopolymere Olefine mit Norbornengrundstruktur, besonders bevorzugt Norbornen, Tetracyclododecen und gegebenenfalls Vinylnorbornen oder Norbornadien. Bevorzugt hergestellt werden Cycloolefincopolymere, die polymerisierte Einheiten enthalten, die sich ableiten von acyclischen Olefinen mit endständigen Doppelbindungen wie α-Olefinen mit 2 bis 20 C-Atomen, besonders bevorzugt Ethylen oder Propylen. Besonders bevorzugt hergestellt werden Norbornen/Ethylen und Tetracyclododecen/Ethylen-Copolymere.

Bei den Terpolymeren werden besonders bevorzugt Norbornen/Vinylnorbonen/Ethylen-, Norbomen/Norbornadien/Ethylen-, Tetracyclododecen/Vinylnorbornen/Ethylen-, Tetracyclododecen/Vinyltetracyclododecen/Ethylen-Terpolymere hergestellt. Der Anteil der polymerisierten Einheiten, die sich ableiten von einem Polyen, bevorzugt Vinylnorbornen oder Norbornadien, liegt bei 0,1 bis 50 mol-%, vorzugsweise bei 0,1 bis 20 mol-%, der Anteil des acyclischen Monoolefins der Formel VII beträgt 50 bis 99,9 mol-%, bevorzugt 75 bis 97 mol-%, bezogen auf die Gesamtzusammensetzung des Cycloolefincopolymers. In den beschriebenen Terpolymeren liegt der Anteil des polycyclischen Monoolefins bei 0,1 bis 50 mol-%, bevorzugt 3 bis 25 mol-%, bezogen auf die Gesamtzusammensetzung des Cycloolefincopolymers.

Mit dem erfindungsgemäßen Verfahren werden vorzugsweise Cyctoolefincopolymere hergestellt, welche polymerisierte Einheiten enthalten, die sich ableiten lassen von polycyclischen Olefinen der Formeln I, und polymerisierte Einheiten, die sich ableiten lassen von acyclischen Olefinen der Formel VII.

Das erfindungsgemäße Verfahren kann bei Temperaturen von -78 bis 200°C und einem Druck von 0,01 bis 200 bar in Gegenwart eines oder mehrerer Katalysatorsysteme, welche mindestens eine ausgewählte Übergangsmetallverbindung enthalten, durchgeführt werden.

Im erfindungsgemäßen Verfahren wird ein Katalysatorsystem enhaltend einen Cokatalysator und eine Übergangsmetallverbindung ausgewählt aus der Gruppe bestehend aus rac-Dimethylsilyl-bis(1-indenyl)zirkondichlorid, [Isopropyliden-(1-indenyl)-cyclopentadienyl]-zirkoniumdichlorid, [Isopropyliden-bis-(1-indenyl)]-zirkonium-dichlorid, [lsopropyliden-(9-fluorenyl)-cyclopentadienyl]-zirkonium-dichlorid, [2,2,4-Trimethyl-4-(η⁵-cyclopentadienyl]-(η⁵-4,5-tetrahydropentalen)]-zirkoniumdichlorid, [Isopropyliden-(9-fluorenyl)-(1-(3-methyl)cyclopentadienyl)-zirkoniumdichlorid und [2,2,4-Trimethyl-4-(η⁵-(3,4-diisopropyl)cyclopenta-dienyl)-(η⁵-4,5-tetrahydropentalen)]-zirkoniumdichlorid eingesetzt.

Die erfindungsgemäß hergestellten elastomeren Cycloolefincopolymeren weisen eine Glastemperatur von -30 °C bis 50 °C und eine Schmelztemperatur von 20 °C bis 130 °C auf. Die Glastemperaturen und Schmelztemperaturen werden mittels DSC (Differential Scanning Calorimetry) bei einer Aufheizrate von 20 °C/min bestimmt.

Besonders geeignete erfindungsgemäß hergestellte Cycloolefincopolymere weisen Viskositätszahlen von 20 bis 300 cm³/g auf. Bestimmt werden die Viskositätszahlen in Dekalin bei 135 °C gemäß DIN 53 728. Die Molekulargewichte der elastomeren Cycloolefincopolymere lassen sich in bekannter Weise durch Variation der Katalysatorkonzentration oder der Temperatur oder durch den Einsatz von Reglern variieren.

Die wichtigen Größen wie Glastemperatur, Molmasse und rheologische Eigenschaften lassen sich durch die Wahl der Synthesebedingungen und des Katalysators einstellen.

Das erfindungsgemäße hergestellte elastomere Cycloolefincopolymer weist bevorzugt einen Elastizitäts modul kleiner 2000 MPa, eine Glastemperatur zwischen -30 °C und 50 °C, eine Schmelztemperatur zwischen 20 °C und 130 °C und einen Gehalt an Cycloolefincopolymer von 3 bis 25 mol%, ein Massemittel zwischen 20000 und 300000 Dalton und eine Wasserdampfsperrwirkung kleiner 0,1 (g^{·}mm)/(m^{2.} d^{·}bar) auf.

Das erfindungsgemäß hergestellte elastomere Cycloolefincopolymer weist besonders bevorzugt eine Glastemperatur zwischen 30 °C und 40 °C, eine Schmelztemperatur zwischen 70 °C und 120 °C, ein Massemittel kleiner 60000 Dalton und eine Wasserdampfsperrwirkung kleiner 0.05 (g^{·}mm)/(m^{2.} d^{·}bar) auf.

Die elastomeren Cycloolefincopolymere mit einer Glastemperatur zwischen 30°C und 40°C eignen sich insbesondere zur Herstellung von Kathedern zur Verwendung in der Medizin. Das Material ist bei Raumtemperatur hart, erweicht aber durch die Körpertemperatur. Das Material weist gleichzeitig eine ausgezeichnete Wasserdampfsperrwirkung auf und läßt sich aufgrund der niedrigen Molmassen sehr gut verarbeiten.

Die erfindungsgemäß hergestellten elastomeren Cycloolefincopolymere besitzen bei 23 °C einen Elastizitätsmodul von 1 bis 2000 MPa. Die Reißdehnung beträgt zwischen 200 und 1000 %, bevorzugt zwischen 400 und 800 % bei einer Reißspannung von 60 bis 200 MPa, bevorzugt von 100 bis 160 MPa.

Die Shore-Härten der Cycloolefincopolymer-Elastomeren betragen 20 bis 100 (Shore A), bevorzugt 40 bis 80 (Shore A). Zusätze oder Additive können in Anteilen von 0,01 bis 50 Gew.-%, bevorzugt von 0,05 bis 20 Gew.-% in den elastomeren Cycloolefincopolymeren enthalten sein. Diese Additive können Weichmacher, Wärmestabilisatoren, Witterungsstabilisatoren, Licht- und UV-Stabilisatoren, Antiklebemittel, Schmiermittel, natürliche oder synthetische Öle, Wachse, Farbstoffe, Pigmente, oberflächenaktive Substanzen, organische oder anorganische Füllstoffe sein, solange diese Additive die Anforderungen der vorliegenden Erfindung nicht beeinträchtigen.

Mit den erfindungsgemäß hergestellten Materialien lassen sich besonders Extrusionsteile wie Platten, Folien, Schläuchen, Rohren, Stangen, Behältern sowie Spritzgußartikel beliebiger Form und Größe herstellen Besonders wichtige Eigenschaften der erfindungsgemäß hergestellten Materialien sind ihre Transparenz, die günstigen mechanischen Eigenschaften, die geringe Wasseraufnahme und die ausgezeichnete Wasserdampfsperrwirkung. Dieses Eigenschaftsprofil machen sie für den Einsatz in der Medizintechnik besonders geeignet. So finden die elastomeren Cycloolefincopolymere Einsatz als Materialien für Katheder, Beutel für Infusionslösungen oder Dialyseflüssigkeit, für Schläuche, Behälter, Implantate, Bestandteile von medizinischen Geräten.

Die erfindungsgemäß hergestellten Polymere sind auch für die Herstellung von Polymerlegierungen einsetzbar. Die Legierungen können in Lösung oder in Schmelze hergestellt werden. Die Legierungen weisen jeweils eine für bestimmte Anwendungen günstige Eigenschaftskombination der Komponenten auf, wie beispielsweise die Erhöhung der Schlagzähigkeit amorpher Thermoplasten. Für Legierungen mit den erfindungsgemäß hergestellten Polymeren sind folgende Polymere einsetzbar: Polyethylen, Polypropylen, (Ethylen-Propylen)-Copolymere, Cycloolefincopolymere, Poly-α-Olefine mit 4 bis 16 Kohlenstoffatomen, weitere thermoplastische Elastomere, Polyisopren, Polybutadien, Naturkautschuk, Polymethacrylate, Polyacrylate, Polystyrol, Polystyrol-Copolymere, Polycarbonate, Polyestercarbonate, Poly(ethylenterephthalat), Poly(butylenterephthalat), Nylon 6 und andere Polyamide, Polyaramide, Polyoxymethylen, Polyoxyethylen. Polyurethane, Polyvinylidenfluorid.

Oberflächen von Werkstücken und Formteilen hergestellt aus den erfindungsgemäß hergestellten Cycloolefincopolymeren können durch geeignete Verfahren wie Fluorierung, Coronabehandlung, Beflammung, Plasmabehandlung modifiziert werden. Dabei lassen sich Eigenschaften wie Haftung oder Bedruckbarkeit verändern, ohne daß die Anforderung der vorliegenden Erfindung beeinträchtigt wird. Die Erfindung wird anhand der nachfolgenden Beispiele näher erläutert,

### Beispiele

### Beispiel 1

Ein 1,5-dm³-Reaktor wurde mit 1 Liter Benzinfraktion (Siedebereich: 90 - 110 °C) und 20 ml toluolischer Methylaluminoxanlösung (10.1 Gew.-% Methylaluminoxan der Molmasse 1300 g/mol nach kryoskopischer Bestimmung) befüllt und bei 80 °C ca. 30 min. gerührt, um eventuell vorhandene Verunreinigungen zu entfernen. Nach Ablassen der Lösung wurde der Reaktor mit 60 cm³ einer 85 gewichtsprozentigen Lösung von Norbornen und 940 ml Toluol beschickt. Durch mehrfaches Aufdrücken von Ethylen (17 bar G) wurde die Lösung mit Ethylen gesättigt und anschließend 10 cm³ der toluolischen Methylaluminoxanlösung in den Reaktor gegeben und 5 Minuten bei 70 °C gerührt. Eine Lösung von 0,015 mg Dimethylsilyl-bis(1-indenyl)zirkondichlorid in 10 cm³ toluolischer Methylaluminoxanlösung wurde nach 15 minütiger Voraktivierung zugegeben. Unter Rühren (750 UPM) wurde eine Stunde bei 80 °C polymerisiert, wobei der Ethylendruck durch Nachdosieren bei 17 bar G gehalten wurde.

Die homogene Reaktionslösung wurde in ein Gefäß abgelassen und mit etwa 1 ml Wasser versetzt. Anschließend wurde die Lösung mit einem Filterhilfsmittel versetzt und über eine Drucknutsche filtriert. Diese Lösung wurde schnell in 5 dm³ Aceton, das mit Trockeneis auf unter - 10 °C abgekühlt worden war, eingegossen, 10 Minuten gerührt und filtriert. Der erhaltene Feststoff wurde mit kaltem Aceton gewaschen. Das Polymer wurde bei 25 °C und einem Druck von 0,2 bar 15 Stunden getrocknet. Es wurden 18,01 g eines weißen Pulvers erhalten. Zur Bestimmung der Viskositätszahi wurden 0,1 g des Polymers in 100 ml Dekalin gelöst. Die Lösung wurde in einem Kapillarviskosimeter bei 135 °C vermessen. Die Viskositätszahl betrug 266 ml/g. Die Glastemperaturen wurden mit einem DSC7 der Firma Perkin Elmer bestimmt. Die Glastemperaturen wurde bei einer Heizrate von 20 °C/min. aus der 2. Heizkurve ermittelt und betrug - 1 °C. Zusätzlich wurde ein Schmelzpunkt bei 46 °C {Schmelzenthalpie: 40 J/g) detektiert. Das Molekulargewicht des Polymeren wurde mittels Gelpermerationschromatographie bei 135 °C in ortho-Dichlorbenzol ermittelt. Als Standards wurden Polyethylentraktionen verwendet. Für das Polymer wurden folgende Werte gefunden: Mₙ: 60.000 g/mol, M_{w}: 120.000 g/mol. M_{w}/Mₙ: 2,0.

### Beispiel 2

Die Versuchsdurchführung wurde analog zu Beispiel 1 durchgeführt. Im Unterschied zu Beispiel 1 wurden 120 ml einer 85 gewichtsprozentigen Lösung von Norbornen in Toluol und 880 ml Toluol verwendet. Es wurden 9 g eines weißen Pulvers erhalten. Die Glasstufe betrug 11 °C. Der Schmelzpunkt betrug 48 °C (Schmelzenthalpie: 0,5 J/g). Es wurde eine VZ von 271 ml/g gemessen. Die Molekulargewichte betrugen Mₙ: 65.000 g/mol. M_{w}: 121.000 g/mol, M_{w}/Mₙ: 1,9.

### Beispiele 3 - 14

Die Versuchsdurchführung der Beispiele 3 - 14 geschah analog zu Beispiel 1. Es wurden lediglich der Katalysator und der Druck geändert. Die Versuchsparameter und die Polymereigenschaften sind in Tabellen 1 und 2 zusammengefaßt.

**Tabelle 1:**

| Beispiel | Katalysat. | Katalys. (mg) | Druck (barG) | 85 % NB-Lös. (mt) | Toluol (ml) | Ausbeute (g) |
|---|---|---|---|---|---|---|
| 3 | A | 0,014 | 17 | 60 | 940 | 6,31 |
| 4 | A | 0,23 | 17 | 120 | 880 | 27,64 |
| 5 | B | 0,095 | 17 | 60 | 940 | 31,62 |
| 6 | B | 0.085 | 17 | 120 | 880 | 62,75 |
| 7 | C | 0,13 | 17 | 60 | 940 | 33,13 |
| 8 | C | 0,07 | 17 | 120 | 880 | 31,03 |
| 9 | D | 0,46 | 17 | 60 | 940 | 37,31 |
| 10 | D | 0,35 | 17 | 120 | 880 | 73,48 |
| 11 | E | 0,033 | 17 | 60 | 940 | 15,45 |
| 12 | E | 0,045 | 17 | 120 | 880 | 11,1 |
| 13 | F | 0,12 | 17 | 60 | 940 | 28,63 |
| 14 | F | 0,155 | 17 | 120 | 880 | 57,8 |
| A [Isopropyliden(1-indenyl)cyclopentadienyl]zirkoniumdichlorid | | | | | | |
| B [Isopropyliden-bis-(1-indenyl)]zirkoniumdichlorid | | | | | | |
| C [Isopropyliden-(9-fluorenyl)-cyclopentadienyl]zirkoniumdichlorid | | | | | | |
| D [2,2,4Trimethyl-4-(η⁵-cyclopentadienyl)-(η⁵-4,5-tetrahydropentalen)]-zirkoniumdichlorid | | | | | | |
| E [Isopropyliden-(9-fluorenyl)-(1-(3-Methyl)cyclopentadienyl)-zirkoniumdichlorid | | | | | | |
| F [2,2,4Trimethyl-4-(η⁵-3,4-Di-isopropyl)cyclopentadienyl)-(η⁵-4,5-tetrahydropentalen)]-zirkoniumdichlorid | | | | | | |

**Tabelle 2**

| Beispiel | VZ (ml/g) | Tg (°C) | Tm (°C) | ΔHm (J/g) | Mw (g/mol) | Mn (g/mol) | Mw/Mn |
|---|---|---|---|---|---|---|---|
| 3 | 82,7 | -3 | 50 | 12,0 | 88000 | 12000 | 7,33 |
| 4 | 33,7 | 32 | 42 | 1,2 | 18500 | 12500 | 1,48 |
| 5 | 78,0 | -5 | 63 | 32,4 | 29000 | 16000 | 1,81 |
| 6 | 90,9 | 7 | - | - | 34000 | 18500 | 1,84 |
| 7 | 172,7 | -4 | 65 | 38,1 | 80000 | 40000 | 2,00 |
| 8 | 154,0 | 11 | - | - | 65000 | 33000 | 1,97 |
| 9 | 288,5 | -2 | 24/109 | 36,5 | 30000 | 20000 | 1,5 |
| 10 | 123,7 | - | 101 | 33,5 | 270000 | 140000 | 1,93 |
| 11 | 199,4 | - | 73 | 85,7 | 95000 | 45000 | 2,11 |
| 12 | 239,0 | -4 | 44/126 | 2,2 | 118000 | 47000 | 2,51 |
| 13 | 92,9 | - 5 | 54 | 28,5 | 45000 | 16000 | 2,81 |
| 14 | 93,6 | 12 | 120 | 1,6 | 50000 | 20000 | 2,5 |

## Patentansprüche

1. Verfahren zur Herstellung von elastomeren Cycloolefincopolymeren mit einer Glastemperatur von -30°C bis 50°C und einer Schmelztemperatur von 20°C bis 130°C enthaltend mindestens ein Cycloolefincopolymer, welches 0,1 bis 50 Mol%, bezogen auf die Gesamtzusammensetzung des Cycloolefincopolymers polymerisierte Einheiten enthält, welche sich ableiten von einem oder mehreren polycyclischen Olefinen der Formeln I, II, II', III, IV, V oder VI 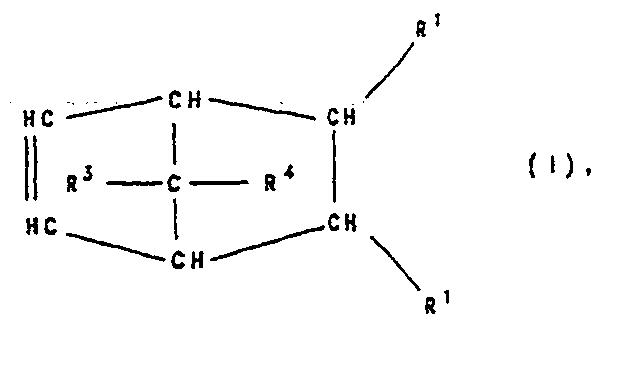 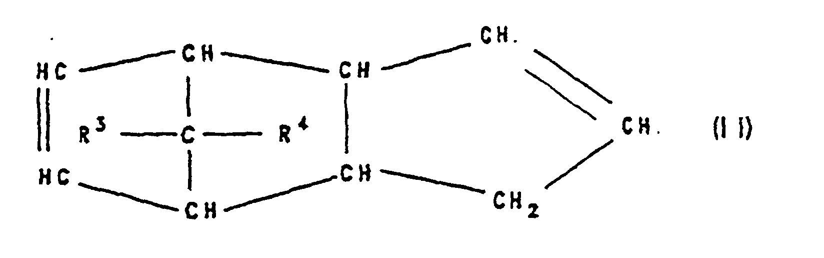 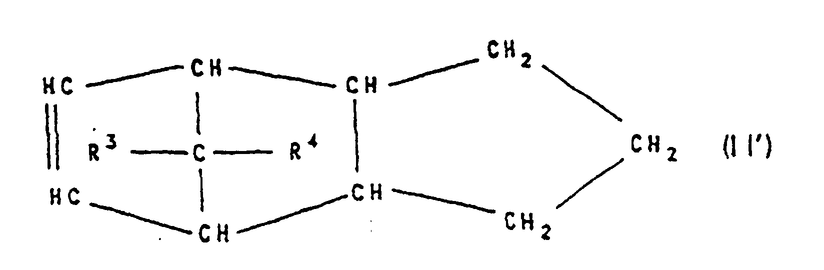 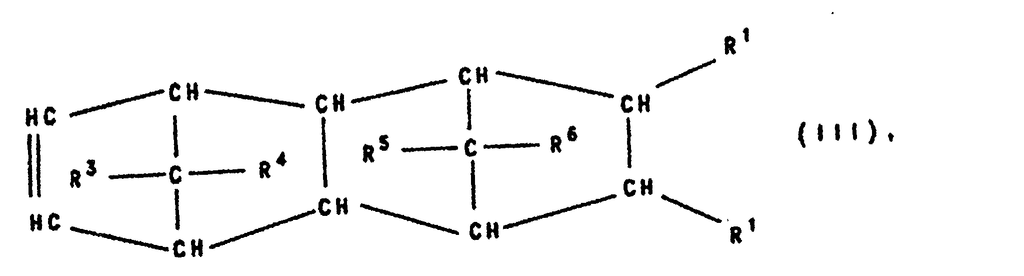 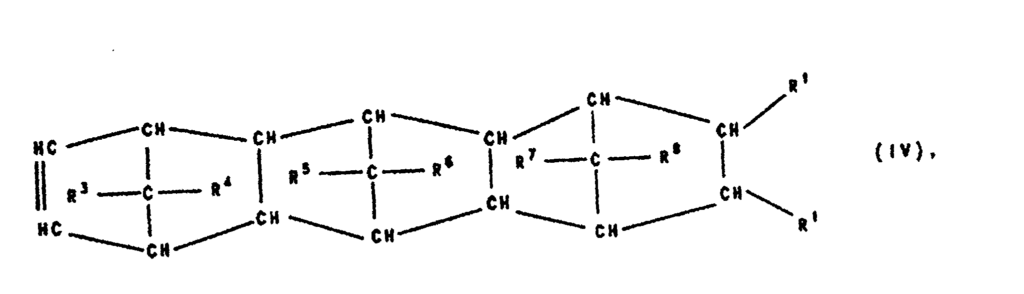 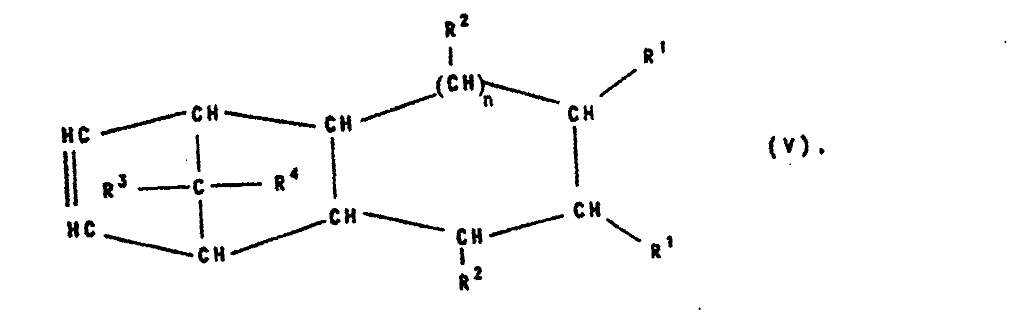 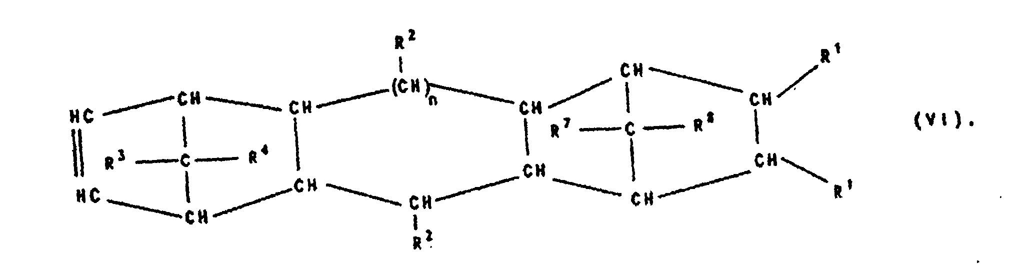 worin R¹, R², R³, R⁴, R⁵, R⁶, R⁷ und R⁸ gleich oder verschieden sind und ein Wasserstoffatom, einen linearen oder verzweigten, gesättigten oder ungesättigten C₁-C₂₀-Alkylrest, C₆-d₁₈-Arylrest, C₇-C₂₀- Alkylarylrest, einen cyclischen oder acyclischen C₂-C₂₀-Alkylenrest bedeuten, oder einen gesättigtne, ungesättigten oder aromatischen Ring bilden, wobei gleiche Reste R¹ bis R⁸ in den verschiedenen Formeln I bis VI eine unterschiedliche Bedeutung haben können, worin n eine ganze Zahl von 0 bis 5 ist
und 50 bis 99,9 mol%, bezogen auf die Gesamtzusammensetzung des Cycloolefincopolymers, polymerisierte Einheiten, welche sich ableiten von einem oder mehreren acyclischen Olefinen der Formel VII 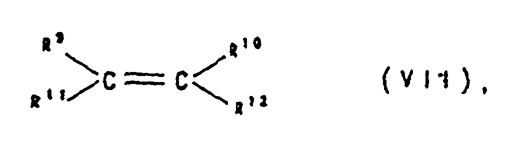 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest oder einen C₆-C₁₈-Arylrest bedeuten, wobei mindestens ein polycyclisches Olefin der Formeln I, II, II', III, IV, V oder VI mit mindestens einem acyclischen Olefin der Formel VII in Gegenwart eines Katalysatorsystems enthaltend einen Cokatatysator und eine Übergangsmetallverbindung polymerisiert wird,
**dadurch gekennzeichnet, daß** die Übergangsmetallverbindung ausgewählt wird aus der Gruppe bestehend aus -rac Dimethylsilyl-bis(1-indenyl)zirkoniumdichlorid [Isopropyliden-(1-indenyl)-cyclopentadienyl]-zirkoniumdichlorid, [Isopropyliden-bis-(1-indenyl)]-zirkoniumdichlorid, [Isopropyliden-(9-fluorenyl)-cyclopentadienyl]-zirconium-dichlorid, (2,2,4-Trimethyl-4-(η⁵-ciclopentadienyl](η⁵-4,5-tetrahydropentalen]-zirkoniumdiChlorid, [Isopropyliden-(9-fluorenyl)-(1-(3-methyl)cyclopentadienyl)-zirkoniumdichlorid und (2,2,4-Trimethyl-4-(η⁵-(3,4-diisopropyl)-cyclopenta-dienyl)-(η⁵-4,5-tetrahydropentalen)]-zirkoniumdiclorid.

2. Verfahren nach Anspruch 1, worin das Cycloolefincopolymer 3 bis 25 mol-% polymerisierte Einheiten enthält, die sich ableiten von polycyclischen Olefinen der Formeln II, II', III, IV oder VI und 75 bis 97 mol-% polymerisierte Einheiten, die sich ableiten von acyclischen Olefinen der Formel VII.

3. Verfahren nach Anspruch 1 oder 2, worin das Cycloolefincopolymer polymerisierte Einheiten enthält die sich ableiten lassen von polycyclischen Olefinen der Formeln I, und polymerisierte Einheiten, die sich ableiten lassen von acyclischen Olefinen der Formel VII.

## Claims

1. A process for preparing elastomeric cycloolefin copolymers having a glass transition temperature of from -30°C to 50°C and a melting point of from 20°C to 130°C, and comprising at least one cycloolefin copolymer which comprises from 0.1 to 50 mol%, based on the total composition of the cycloolefin copolymer, of polymerized units derived from one or more polycyclic olefins of the formula I, II, II', III, IV, V or VI, 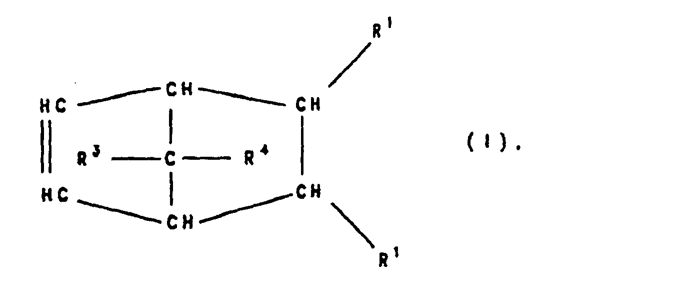 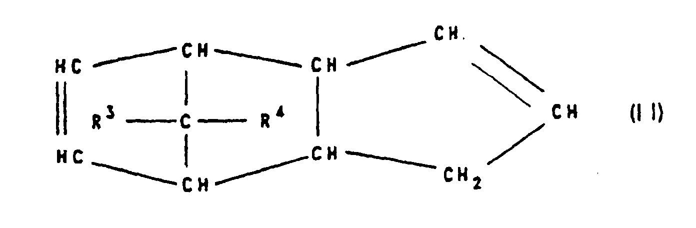 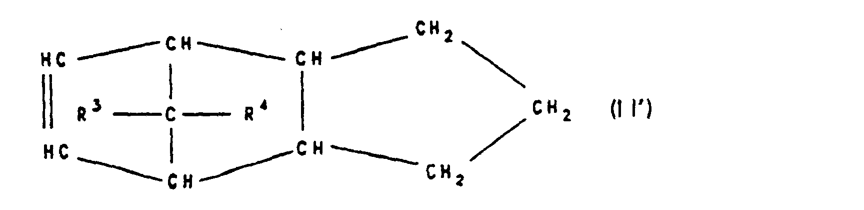 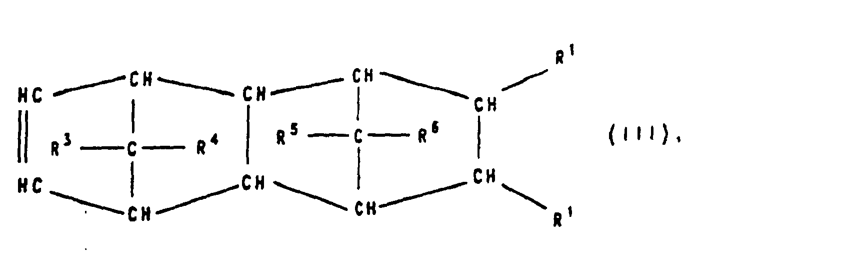 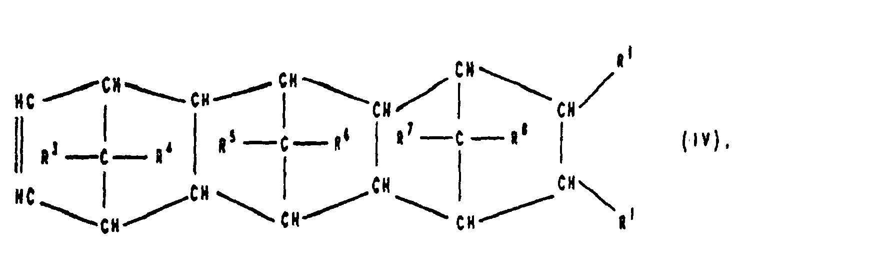 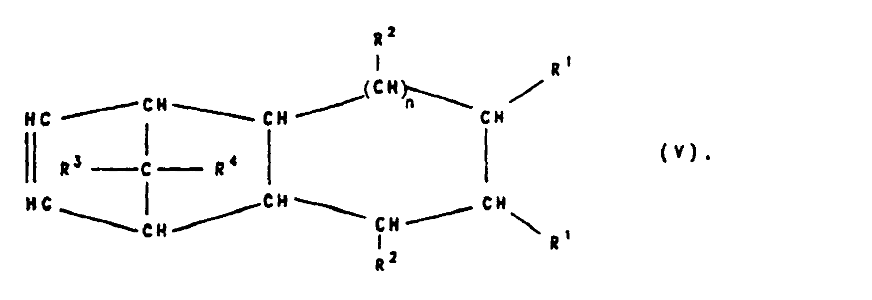 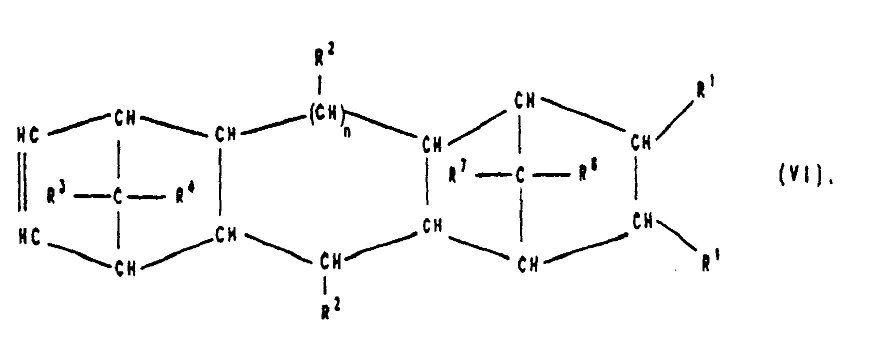 where R¹, R², R³, R⁴, R⁵, R⁶, R⁷ and R⁸ are identical or different and are each a hydrogen atom, a linear or branched, saturated or unsaturated C₁-C₂₀-alkyI radical, a C₆-C₁₈-aryl radical, a C₇-C₂₀-alkylaryl radical, a cyclic or acyclic C₂-C₂₀-alkylene radical or form a saturated, unsaturated or aromatic ring, where the same radicals R¹ to R⁸ in the various formulae I to VI can have different meanings, wherein n is an integer from 0 to 5,
and from 50 to 99.9 mol%, based on the total composition of the cycloolefin copolymer, of polymerized units derived from one or more acyclic olefins of the formula VII 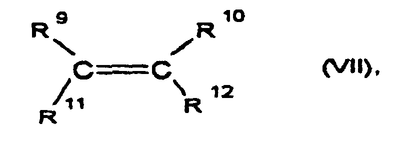 where R⁹, R¹⁰, R¹¹ and R¹² are identical or different and are each a hydrogen atom, a linear, branched, saturated or unsaturated C₁-C₂₀-hydrocarbon radical or a C₆-C₁₈-aryl radical, by polymerizing at least one polycyclic olefin of the formulae I, II, II', III, IV, V or VI with at least one acyclic olefin of the formula VII in the presence of a catalyst system comprising a cocatalyst and a transition metal compound, **characterized in that** the transition metal compound is selected from the group consisting of rac-dimethylsilylbis(1-indenyl)zirconium dichloride, [isopropylidene-(1-indenyl)cyclopentadienyl]zirconium dichloride, [isopropylidenebis(1-indenyl)]zirconium dichloride, [isopropylidene-(9-fluorenyl)cyclopentadienyl]zirconium dichloride, [2,2,4-trimethyl-4-(η⁵-cyclopentadienyl]-(η⁵-4,5-tetrahydropentalene)]-zirconium dichloride, [isopropylidene-(9-fluorenyl)-(1-(3-methyl)cyclopentadienyl)zirconium dichloride and [2,2,4-trimethyl-4-(η⁵-(3,4-diisopropyl)cyclopentadienyl)-(η⁵-4,5-tetrahydropentalene)]zirconium dichloride.

2. A process as claimed in claim 1, wherein the cycloolefin copolymer comprises from 3 to 25 mol% of polymerized units derived from polycyclic olefins of the formula I, II, II', III, IV, V or VI and from 75 to 97 mol% of polymerized units derived from acyclic olefins of the formula VII.

3. A process as claimed in claim 1 or 2, wherein the cycloolefin copolymer comprises polymerized units derived from polycyclic olefins of the formula I and polymerized units derived from acyclic olefins of the formula VII.

## Revendications

1. Procédé de préparation de copolymères cyclooléfiniques élastomères présentant une température de transition vitreuse de -30°C à 50°C et une température de fusion de 20°C à 130°C, comprenant au moins un copolymère cyclo-oléfinique renfermant de 0,1 à 50 % en moles, par rapport à la composition totale du copolymère cyclo-oléfinique, de motifs polymérisés qui sont dérivés d'une ou de plusieurs oléfines polycycliques de formules I, II, II', III, IV, V ou VI 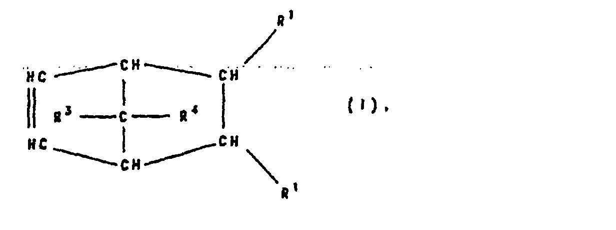 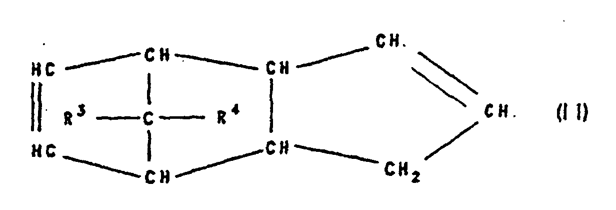 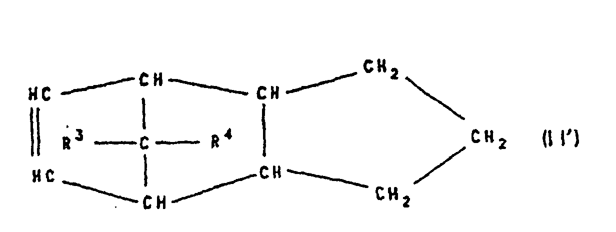 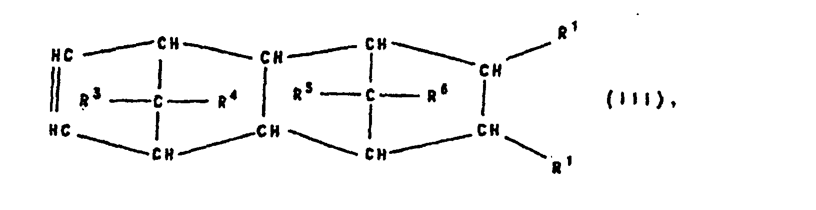 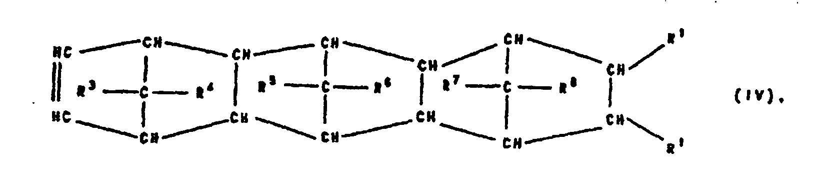 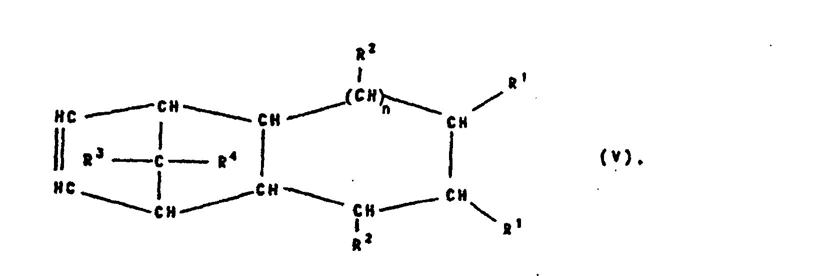 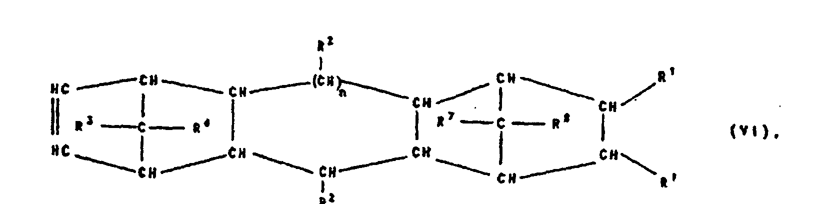 dans lesquelles R¹, R², R³, R⁴, R⁵, R⁶, R⁷ et R⁸ sont identiques ou différents et représentent un atome d'hydrogène, un radical alkyle en C₁-C₂₀ linéaire ou ramifié, saturé ou insaturé, un radical aryle en C₆-C₁₈, un radical C₇-C₂₀-alkylène-aryle, un radical alkylène en C₂-C₂₀ cyclique ou acyclique, ou forment un noyau saturé, insaturé ou aromatique des radicaux R¹ à R⁸ identiques dans les diverses formules I à VI pouvant présenter une signification différente, où n représente un entier de 0 à 5,
et de 50 à 99,9 % en moles, par rapport à la composition totale du copolymère cyclo-oléfinique, de motifs polymérisés qui sont dérivés d'une ou de plusieurs oléfines acycliques de formule VII 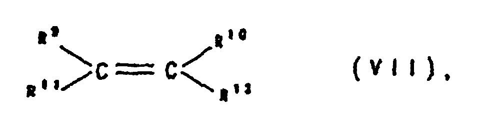 dans laquelle R⁹, R¹⁰, R¹¹ et R¹² sont identiques ou différents et représentent un atome d'hydrogène, un radical hydrocarboné en C₁-C₂₀ linéaire, ramifié, saturé ou insaturé ou un radical aryle en C₆-C₁₈, au moins une oléfine polycyclique de formules I, II, II', III, IV, V ou VI étant polymérisée avec au moins une oléfine acyclique de formule VII en présence d'un système catalyseur comprenant un co-catalyseur et un composé à métal de transition,
**caractérisé en ce que** le composé à métal de transition est choisi parmi le groupe constitué du dichlorure de diméthylsilyl-bis(1-indényl)zirconium, du dichlorure d'[isopropylidène-(1-indényl)-cyclopentadiényl]zirconium, du dichlorure d'(isopropylidène-bis- (1-indényl)]zirconium, du dichlorure d'[isopropylidène-(9-fluorényl)-cyclopentadiényl]zirconium, du dichlorure de [2,2,4-trimethyl-4-(η⁵-cyclopentadiényl]-(η⁵-4,5-tétrahydropentalène)]zirconium, du dichlorure d'[isopropylidène-(9-fluorényl)-(1-(3-méthyl)cyclopentadiényl)zirconium et du dichlorure de [2,2,4-trimethyl-4-(η⁵-(3,4-diisopropyl)-cyclopenta-diényl)-(η⁵-4,5-tétrahydropentalène)]zirconium.

2. Procédé selon la revendication 1, dans lequel le copolymère cyclo-oléfinique renferme de 3 à 25 % en moles d'oléfines polycycliques de formules I, II, II', IV, V ou VI et de 75 à 97 % en moles de motifs polymérisés qui sont dérivés d'oléfines acycliques de formule VII.

3. Procédé selon la revendication 1 ou 2, dans lequel le copolymère cyclo-oléfinique renferme des motifs polymérisés qui peuvent être dérivés d'oléfines polycycliques de formule I et des motifs polymérisés qui peuvent être dérivés d'oléfines acycliques de formule VII.
